# FASCICULE DE BREVET EUROPEEN

(11) **EP 2 221 571 B1**
(45) Date de publication et mention de la délivrance du brevet: **15.03.2017**
(21) Numéro de dépôt: 10447003.4
(22) Date de dépôt: 26.01.2010
(51) Int. Cl.: F41G 1/30, F41G 1/48

(54) **Viseur à point rouge mobile amélioré**
Verbessertes Visier mit beweglichem roten Leuchtpunkt
Improved sight with mobile red dot

(30) Priorité: 12.02.2009 BE 200900078
(43) Date de publication de la demande: 25.08.2010
(73) Titulaire: FN Herstal S.A., 4040 Herstal (BE)
(72) Inventeur: René, Johannes, 4654 Herve (BE)
(74) Mandataire: Donné, Eddy

(56) Documents cités:
- EP-A1- 1 818 645
- US-A1- 2006 162 226
- US-B1- 6 967 775

## Description

L'invention concerne un viseur à point rouge mobile amélioré.

L'invention concerne en particulier un type de viseur à "point rouge mobile" comme décrit dans le document EP 1.818.645 du même inventeur.

Il s'agit d'un viseur destiné à être monté sur une arme pour le tir de munitions ayant une trajectoire balistique non tendue, donc au tir de grenades par exemple, qui nécessite de tirer en donnant un certain angle d'élévation à l'arme, en fonction de la distance de la cible.

Dans ce type de viseur, un point ou un réticule lumineux est projeté à l'infini avec un angle de visée tel, par rapport à l'arme, que le tireur obtient l'élévation correcte de son arme en alignant ce point ou ce réticule sur la cible lors de la visée.

Le viseur à point rouge mobile selon le document EP 1.818.645 comprend une source de lumière fixe ; un miroir rotatif ; une lame réfléchissante plane ou d'une manière plus générale une surface réfléchissante, la source de lumière générant un faisceau lumineux collimaté qui est projeté sur la surface réfléchissante pour matérialiser un point rouge ou réticule visible pour le tireur par la réflexion sur la surface réfléchissante, le faisceau étant projeté sur la surface réfléchissante par l'intermédiaire du miroir rotatif dont l'angle d'inclinaison par rapport au faisceau lumineux généré est réglable afin de régler l'angle de visée sous lequel le point rouge est observé par le tireur vis à vis d'une direction de référence du viseur et cela dans une plage des angles de visée entre un angle de visée minimal et un angle de visée maximal.

Le viseur ainsi réalisé permet au tireur de régler l'angle du miroir rotatif en fonction du type de munition utilisée et de la distance à la cible, cette distance pouvant être mesurée ou pouvant être estimée par le tireur.

L'angle du miroir rotatif est réglé par exemple par un bouton de réglage avec une échelle de réglage calibré en fonction de la distance à la cible ou par un actuateur contrôlé par un système de calcul permettant de calculer l'angle à donner au miroir rotatif en fonction de la distance et éventuellement en fonction du type de munition choisi.

Une fois que l'angle du miroir rotatif est instauré, il suffit au tireur d'observer la cible et de chercher l'élévation de son arme pour laquelle le point rouge est aligné sur la cible, signe que l'arme se trouve dans la bonne position de tir.

Un inconvénient de ce type de viseur est que l'angle de visée maximale est limité par la longueur de la surface réfléchissante dans le plan du faisceau lumineux car la longueur de la surface réfléchissante est d'autant plus grande que l'angle de visée à atteindre est important.

Or, pour utiliser la portée maximale d'une munition balistique, il faut pouvoir tirer avec des angles de l'ordre de 40° ou plus, ce qui nécessite une surface réfléchissante relativement longue, ce qui influence défavorablement l'encombrement du viseur.

L'invention a pour but d'éviter les inconvénients susdits et de permettre de réaliser un viseur à point rouge mobile avec un miroir réfléchissant ou semi-réfléchissant de taille réduite permettant d'atteindre des angles de visée proches ou supérieurs à 40°.

Ce but est atteint selon l'invention par un viseur à point rouge mobile pour viser une cible en face du viseur, ledit viseur comprenant
∘ une source de lumière fixe (4);
∘ un miroir rotatif (9);
∘ une surface réfléchissante (17),
la source de lumière générant un faisceau lumineux collimaté qui est projeté sur la surface réfléchissante pour matérialiser un point rouge ou réticule visible pour le tireur par la réfléction sur la surface réfléchissante quand l'oeil du tireur (19) se trouve dans le faisceau lumineux réfléchi, le faisceau étant projeté sur la surface réfléchissante par l'intermédiaire du miroir rotatif dont l'angle d'inclinaison par rapport au faisceau lumineux généré est réglable afin de régler l'angle de visée sous lequel le point rouge est observé par le tireur vis-à-vis d'une direction de référence (X-X') du viseur (1) et cela dans une plage des angles de visée entre un angle de visée minimal et un angle de visée maximal, le viseur comprenant au moins un élément optique comprenant au moins un élément transparent situé dans la trajectoire du faisceau lumineux entre le miroir rotatif et l'oeil du tireur et qui dévie, par réfraction, les rayons du faisceau lumineux collimaté et modifie leur incidence sur la surface réfléchissante par rapport à une situation avec un même angle de visée mais sans ce élément optique, de manière à ce que le faisceau lumineux soit dévié sur son parcours entre le miroir rotatif et l'oeil du tireur, la forme de cet élément étant telle que les déviations qu'il provoque sur le faisceau lumineux ont pour effet de réduire le trajet parcouru par le point d'incidence du faisceau lumineux sur la surface réfléchissante par rotation du miroir rotatif entre deux positions d'angles de visée au moins dans une partie de la plage susdite des angles de visée , et de préférence au moins dans la région des angles de visée proche de l'angle de visée maximal. La surface réfléchissante 17 peut être réalisée comme une surface courbe dont la convexité est tournée vers le miroir rotatif.

L'élément optique réalise en quelque sorte une "compression" des trajectoires du faisceau, et cet effet de compression optique obtenu ainsi est de réduire le trajet parcouru par le point d'incidence du faisceau lumineux sur la surface réfléchissante par rotation du miroir rotatif entre deux angles de visé, au moins dans une partie de la plage susdite des angles de visée.

A cause de cet effet des angles de visée de l'ordre de 40° ou plus peuvent être réalisés avec une longueur de la surface réfléchissante plus petite vis-à-vis d'un viseur sans cet élément optique selon l'invention.

Un tel viseur est donc moins encombrant que les viseurs du même type avec une lame réfléchissante plane et sans ces moyens optiques supplémentaires.

Pour plus de clarté, quelques exemples de réalisation d'un viseur à point rouge mobile amélioré selon l'invention sont décrits ci-après à titre illustratif et non restrictif, référence étant faite aux dessins annexés dans lesquels:
La figure 1 est une vue latérale schématique d'un viseur selon l'état de la technique, montré dans une position de repos;
la figure 2 est une coupe selon la ligne II-II de la figure 1;
la figure 3 représente le viseur de la figure 1, mais pour un réglage de l'angle de visé différent;
la figure 3B représente le viseur de la figure 3A mais dans une position de tir;
la figure 4 représente le trajet suivi par le faisceau lumineux dans le viseur de la figure 1, pour différents angles de visée;
les figures 5 à 11 représentent des vues semblables à celle de la figure 4, mais pour d'autre réalisations d'un viseur selon l'invention.

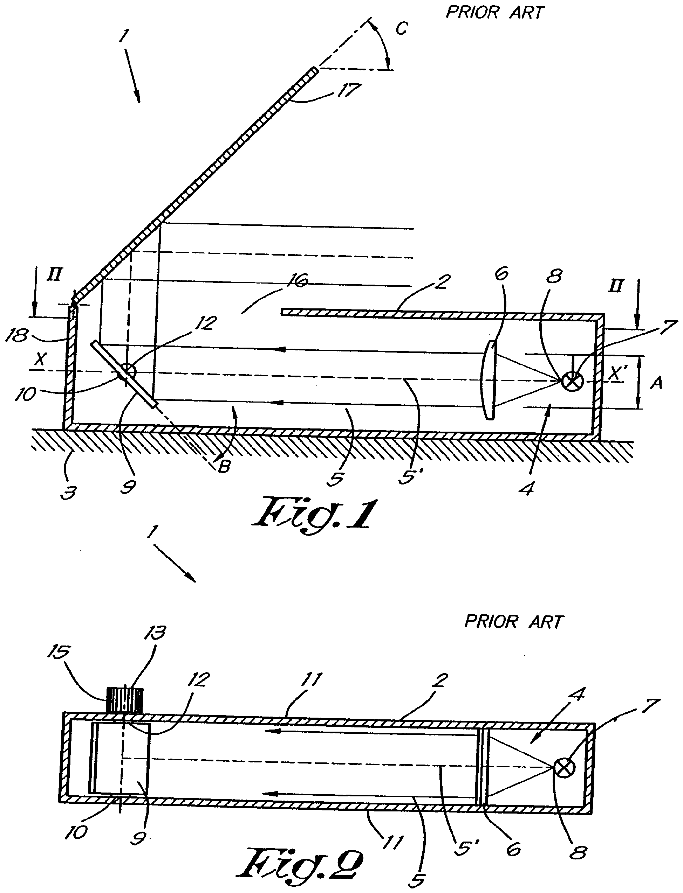

Les figures 1 et 2 représentent un viseur selon l'état de la technique décrit dans le document EP 1.818.645.

Il s'agit d'un viseur 1 à point rouge mobile qui comprend un boîtier 2 prévu pour être monté sur une arme 3, le boîtier 2 s'allongeant longitudinalement essentiellement parallèle à l'axe du canon de l'arme 3.

A l'intérieur du boîtier 2 se trouve une source de lumière fixe 4 générant un faisceau lumineux collimaté 5 avec un rayon central 5' dont l'axe optique X-X' est dans ce cas parallèle à l'axe du canon de l'arme 3.

Dans l'exemple représenté la source de lumière 4 est un collimateur composé d'une lentille convergente 6 et d'une lampe ou d'un autre source lumineuse 7 quasi ponctuelle à dimensions réduites, par exemple de l'ordre du dixième de millimètre, située au foyer 8 de la lentille 6 et générant le point rouge.

Le faisceau lumineux 5 collimaté a un diamètre A de l'ordre de 15 à 20 millimètres, permettant avantageusement d'avoir des dimensions transversales de largeur et de hauteur du viseur 1 réduites par rapport à d'autres viseurs.

Un miroir 9 est placé dans le faisceau collimaté 5 sous un angle B par rapport à l'axe optique X-X' du faisceau lumineux généré 5.

Le miroir 9 est monté d'une manière rotative dans le boîtier 2 et est fixé à cette fin sur un axe transversal 10 monté d'une manière rotative entre les parois latérales 11 du boîtier 2.

Une extrémité 12 de l'axe 10 du miroir 9 traverse une des parois latérales 11 du boîtier 2 et porte un dispositif de réglage 13 de l'angle d'inclinaison B du miroir rotatif 9 par rapport au faisceau lumineux généré 5, par exemple sous forme d'un bouton de réglage rotatif, muni éventuellement d'un mécanisme de démultiplication, qui permettra au tireur de positionner le miroir 9 en fonction de la distance de la cible 14.

Le bouton de réglage peut être équipé d'une graduation 15 représentant la distance de la cible 14 ou différentes graduations pour différents types de munitions, tenant compte des caractéristiques balistiques de celles-ci.

Le faisceau lumineux 5 est projeté à travers une ouverture 16 dans le boîtier 2 sur une surface réfléchissante 17 sous forme d'une lame réfléchissante 17 pour matérialiser un point rouge ou réticule visible pour le tireur sur la surface 17 de la lame réfléchissante qui est montée sur une extrémité 18 du boîtier 2 sous un angle fixe C, par exemple de 45°, par rapport à l'axe optique X-X' du faisceau lumineux généré 5.

L'utilisation du viseur 1 est comme suit.

Au repos, c'est-à-dire quand on vise dans l'axe de l'arme 3 avec une élévation E qui est nulle, donc avec l'arme en position horizontale comme représenté dans la figure 1, l'angle de repos B du miroir 9 est par exemple 45°. L'angle de visée D vaut à ce moment 0°, cet angle étant l'angle entre le faisceau lumineux 5 réfléchi sur la surface réfléchissante 17 et l'axe optique X-X' ou l'axe de l'arme 3.

Le tireur 19 fait une estimation de la distance de la cible 14 et règle l'inclinaison adéquate B du miroir 9 en utilisant le dispositif de réglage 13 qui est gradué en distance.

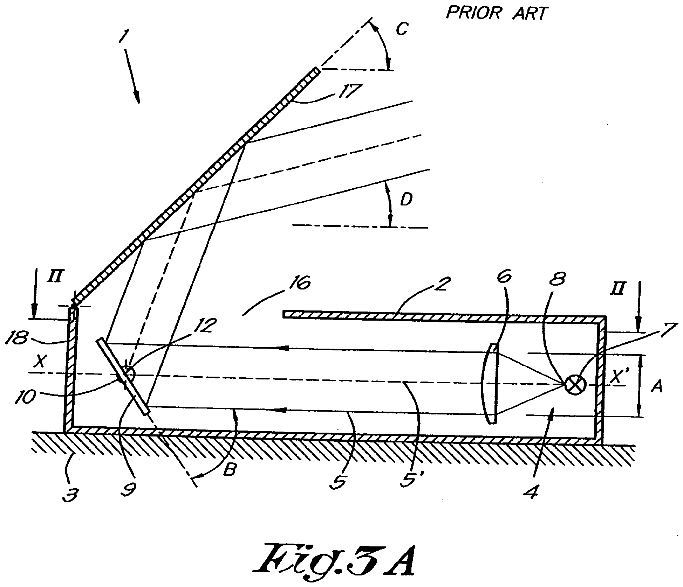

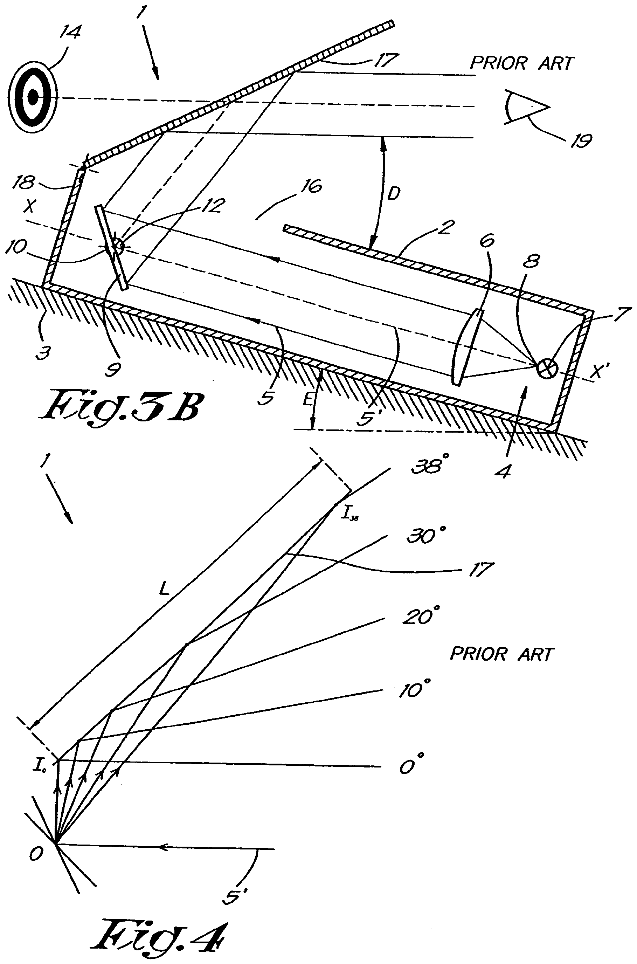

Le faisceau lumineux 5 est projeté sur la surface réfléchissante 17 et est réfléchi comme illustré dans la figure 3 vers le tireur 19 pour matérialiser un point rouge ou réticule que le tireur 19 peut observer à l'infini quand l'oeil du tireur 19 se trouve dans le faisceau lumineux 5 réfléchi par la surface réfléchissante 17.

Lorsque le miroir 9 tourne comme représenté dans la figure 3A, la déviation de l'angle D du faisceau vaut deux fois celle de l'angle B du miroir 9. En d'autres mots, si le miroir 9 tourne par exemple de 15° par rapport à la position de repos de 45°, l'angle D passe de 0° à 30°.

L'inclinaison B du miroir 9, fonction de la distance de la cible 14, détermine donc l'angle D sous lequel le point rouge est vu par le tireur 19, et donc l'angle d'élévation E qui est donné à l'arme 3, comme représenté dans la figure 3B, quand le tireur aligne le point rouge ou le réticule sur la cible 14 qui est observé à côté ou à travers de la surface réfléchissante 17.

La figure 4 représente les trajets du rayon central 5' du faisceau collimaté 5, pour quatre valeurs différentes de l'angle B du miroir rotatif 9 et donc pour quatre valeurs correspondantes de l'angle de visées D, notamment pour des angles de visée D de 0°, 10°, 20°, 30° et 38° respectivement comme indiqué dans la figure.

Le point d'incidence I du rayon central 5' du faisceau lumineux 5 sur la surface réfléchissante 17 est situé au point I₀ pour un angle de visée D de 0°, tandis que le point d'incidence I pour un angle de visée D de 38° se situe dans le point I₃₈, presqu'à l'extrémité distal de la surface réfléchissante 17. Le point d'incidence I du rayon central 5' se déplace donc du point I₀ pour un angle de visée 0° au point I₃₈ pour un angle de visée de 38°.

La longeur L de la surface réfléchissante 17 dans le plan du faisceau lumineux 5 est donc imposée par la distance entre les points d'incidence extrèmes I₃₈ et I₀ et donc par l'angle de visée D maximal que l'on veut obtenir et qui, dans le cas de la figure 4, est proche de 40°.

Dans le cas de la figure 4 la longueur L de la surface réfléchissante est relativement importante.

L'invention a pour but de limiter la longueur L de la surface réfléchissante 17 sans que pour autant l'angle de visée D maximal ne soit pas compromis et donc de permettre d'atteindre des angles de visée D proches ou supérieurs à 40°.

Ce but est atteint selon l'invention en introduisant entre le miroir rotatif 9 et l'oeil du tireur 19 un ou plusieurs élément(s) optique(s) transparent(s) 20 de forme adéquate qui dévient les rayons du faisceau lumineux collimaté 5 et modifient leur incidence sur le miroir réfléchissant 9 par rapport à une situation avec un même angle de visée D mais sans cet élément optique 20.

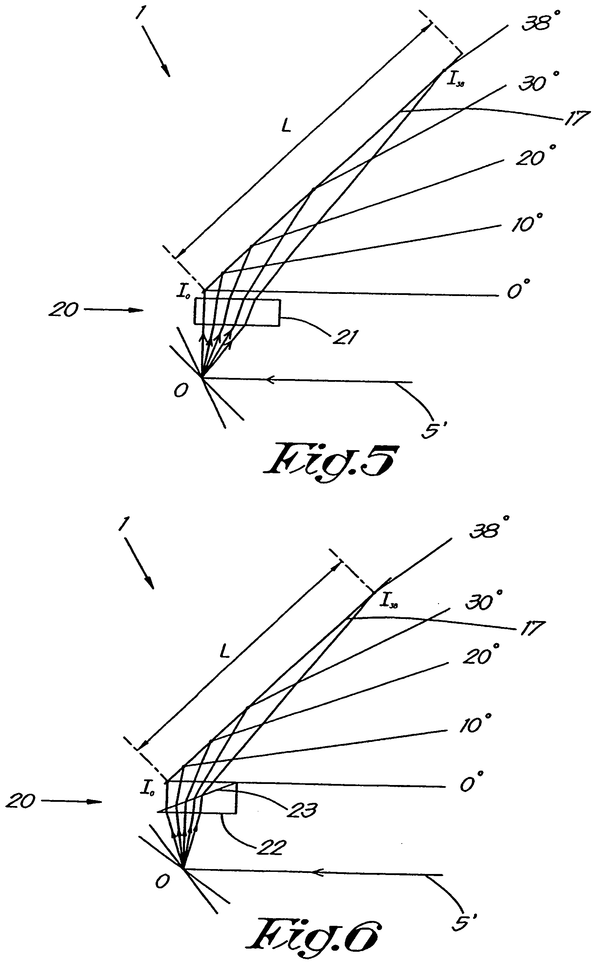

Dans le cas de la figure 5 l'élément optique 20 est réalisé sous forme d'un élément transparent 21 de section rectangulaire dans le plan du faisceau et situé entre le miroir rotatif 9 et la surface réfléchissante 17 et positionné parallèlement à l'axe optique X-X'.

L'élément optique transparent 21 est déterminé de manière à ce que les réfractions qu'il provoque sur les rayons du faisceau 5 diminuent la longueur du trajet OI de ceux-ci entre le miroir rotatif 9 et le point d'incidence I sur la surface réfléchissante 17 comme on peut le constater en comparant les figures 4 et 5, respectivement sans et avec élément optique 20, et ce d'autant plus que l'indice de réfraction de l'élément optique 20 est élevé.

L'élément optique 20 réalise en quelque sorte une "compression" des trajectoires OI du faisceau 5, et cet effet de compression, d'autant plus important que l'angle de visée D est grand, réduit la distance entre le point d'incidence I₀ du faisceau 5 pour un angle de visée de 0°, et le point I₃₈ pour l'angle de visée de 38° proche de l'angle de visée D maximum.

Il réduit donc la longueur L de la surface réfléchissante 17 requise pour fournir l'angle de visée maximum.

Pour que l'effet de compression permette une réduction appréciable de la longueur L de la surface réfléchissante 17, il faut évidemment que l'épaisseur de l'élément optique 20 soit suffisante.

On notera que la forme rectangulaire de l'élément d'optique de compression 20 illustré à la figure 5 ne représente qu'un exemple, et que d'autres formes peuvent être utilisées, comme l'illustre la figure 6, qui représente un élément optique de compression 22 de section triangulaire.

On constate sur cette figure 5 que la réfraction produite sur l'hypoténuse 23 modifie la relation entre l'angle B du miroir rotatif 9 et l'angle de visée obtenu D et qu'il faut donc adapter la loi de réglage du miroir en fonction de l'angle de visée à obtenir, c'est-à-dire en fonction de la distance de la cible, et également que pour les angles de visée faibles le trajet OI du faisceau entre le miroir rotatif 9 et la surface réfléchissante 17 est légèrement augmenté, tandis que pour les angles importants, le trajet OI est cependant réduit, ce qui permet d'obtenir l'effet recherché, c'est-à-dire la réduction de la longueur de la surface réfléchissante 17 requise pour fournir l'angle de visée maximum.

L'élément triangulaire 22 représenté à la figure 6 n'est pas un composant optique standard courant, contrairement à l'élément rectangulaire 21 de la figure 5, mais il présente sur celui-ci l'avantage d'être moins volumineux, et donc moins lourd, ce qui peut être intéressant dans une application sur arme légère.

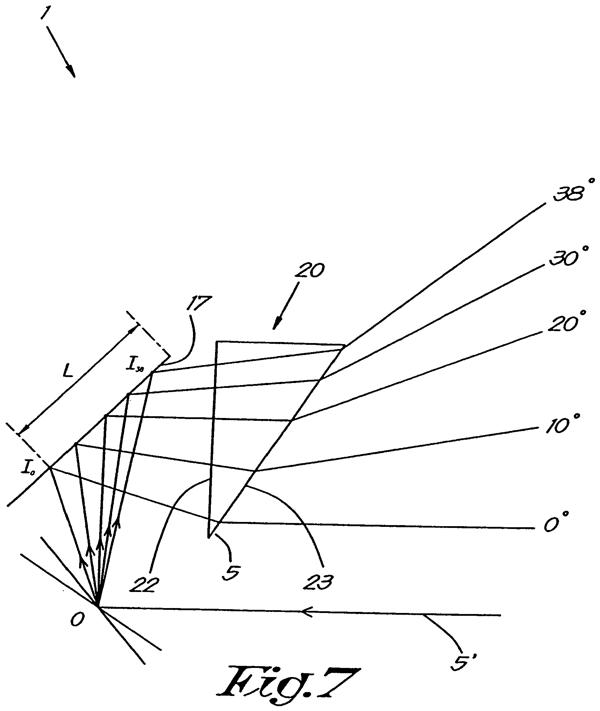

Dans les exemples des figures 5 et 6, l'élément optique 20 est placé entre le miroir rotatif 9 et la surface réfléchissante. Cet élément optique 20 peut également être placé en sortie du viseur 1, c'est-à-dire entre la surface réfléchissante 17 et l'oeil du tireur 19, comme représenté à la figure 7. Ici aussi, les réfractions provoquées sur le faisceau 8 par l'élément optique 20 entraînent une réduction du trajet OI parcouru par celui-ci entre le miroir rotatif 9 et la surface réfléchissante 17, ce qui entraîne l'effet recherché, c'est-à-dire la réduction de la longueur L de la surface réfléchissante requise pour fournir l'angle de visée maximum.

Dans l'exemple de la figure 7, on constate que la réduction de longueur L est importante, mais cet avantage est en partie perdu par l'encombrement de l'élément optique 20.

Il va de soi que l'on peut combiner des éléments optiques de compression situés entre le miroir rotatif 9 et la surface réfléchissante 17, avec des éléments optiques de compression situés entre la surface réfléchissante 17 et l'oeil du tireur 19.

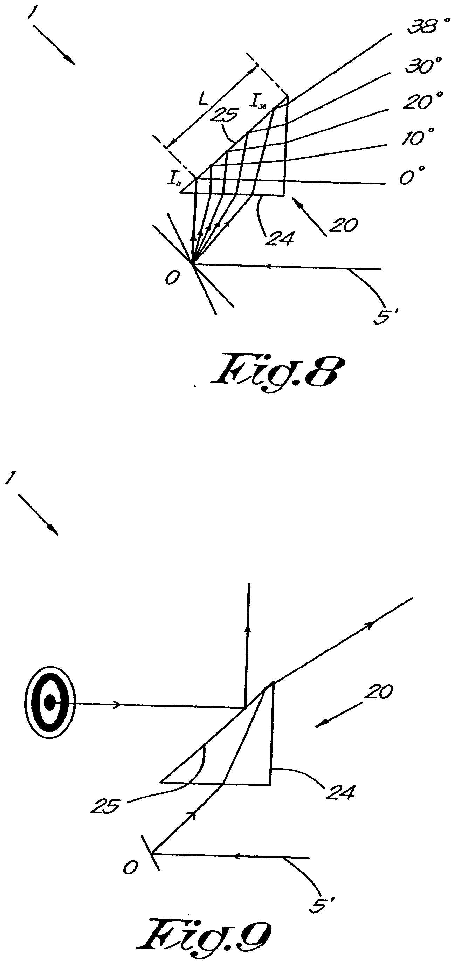

Selon une réalisation avantageuse de l'invention, l'élément optique 20 utilisé pour la compression des trajectoires du faisceau 5 est un prisme isocèle droit 24 dont l'hypoténuse 25 joue le rôle de la surface réfléchissante 17, comme représenté à la figure 8.

On notera que le prisme 24 intervient à la fois entre le miroir rotatif 9 et la surface réfléchissante 17 que constitue son hypoténuse 25, et entre cette surface 17 et l'oeil du tireur 19. Outre qu'elle combine l'élément optique de compression 20 et la surface réfléchissante 17 en un seul composant, cette configuration a de ce fait l'avantage de maximiser la portion de trajet du faisceau lumineux 5 dans le verre du prisme, et donc de maximiser l'effet de compression décrit plus haut.

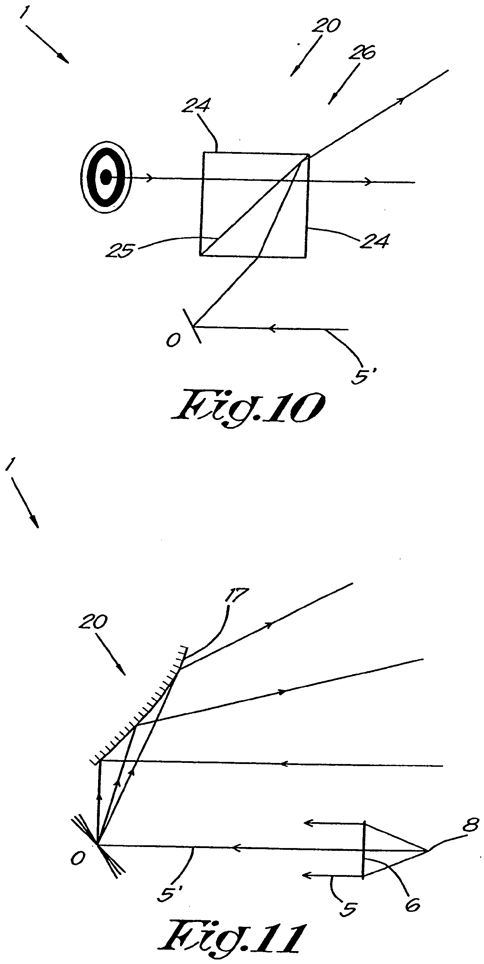

Du fait de la surface réfléchissante 17 constituée par l'hypoténuse 25, le prisme n'est cependant pas transparent, car il réfléchit totalement les rayons provenant de la cible 14, comme le montre la figure 9. Pour résoudre ce problème, on peut remplacer le prisme 24 par un cube séparateur 26, c'est-à-dire un assemblage de deux prismes droits accolés par leur hypoténuse 25, celle-ci étant recouverte par une colle ou un coating adéquat qui rend la surface réfléchissante formé par l'hypoténuse 25 semi-transparente ainsi que l'ensemble 26 comme indiqué à la figure 10.

Une autre variante d'un élément optique selon l'invention est représentée dans la figure 11 qui montre un élement optique 20 sous forme de la surface réfléchissante 17 réalisée comme une surface courbe dont la convexité est tournée vers le miroir rotatif 9. Il est évident que l'invention n'est nullement limitée aux exemples décrits ci-avant mais que de nombreuses modifications peuvent être apportées aux viseurs à point rouge mobile décrits ci-avant sans sortir du cadre de l'invention telle que définie dans les revendications suivantes.

## Revendications

1. Viseur à point rouge mobile pour viser une cible (14) en face du viseur, ledit viseur comprenant
∘ une source de lumière fixe (4) ;
∘ un miroir rotatif (9) ;
∘ une surface réfléchissante (17),
la source de lumière (4) générant un faisceau lumineux collimaté (5) qui est projeté sur la surface réfléchissante (17) pour matérialiser un point rouge ou un réticule visible pour le tireur (19) par la réflexion sur la surface réfléchissante (17) quand l'oeil du tireur (19) se trouve dans le faisceau lumineux (5) réfléchi, le faisceau (5) étant projeté sur la surface réfléchissante (17) par l'intermédiaire du miroir rotatif (9) dont l'angle d'inclinaison (B) par rapport au faisceau lumineux généré (5) est réglable afin de régler l'angle de visée (D) sous lequel le point rouge est observé par le tireur (19) vis à vis d'une direction de référence (X-X') du viseur (1) et cela dans une plage des angles de visée entre un angle de visée minimal et un angle de visée maximal, **caractérisé en ce que**
le viseur (1) comprend au moins un élément optique (20) comprenant au moins un élément transparent (21,22,24,26) situé dans la trajectoire du faisceau lumineux (5) entre le miroir rotatif (9) et l'oeil du tireur (19) et qui dévie, par réfraction, les rayons du faisceau lumineux collimaté (5) et modifie leur incidence sur la surface réfléchissante (17) par rapport à une situation avec un même angle de visée (D) mais sans cet élément optique (20), de manière à ce que le faisceau lumineux (5) soit dévié sur son parcours entre le miroir rotatif (9) et l'oeil du tireur (19), la forme de cet élément optique (20) étant telle que les déviations qu'il provoque sur le faisceau lumineux (5) ont pour effet de réduire, par rapport à une situation sans cet élément optique (20),
le trajet (OI) parcouru par le point d'incidence du faisceau lumineux (5) sur la surface réfléchissante (17) par rotation du miroir rotatif (9) entre deux positions d'angles de visée, au moins dans une partie de la plage susdite des angles de visée.

2. Viseur à point rouge mobile pour viser une cible (14) en face du viseur, ledit viseur comprenant
∘ une source de lumière fixe (4) ;
∘ un miroir rotatif (9) ;
∘ une surface réfléchissante (17),
la source de lumière (4) générant un faisceau lumineux collimaté (5) qui est projeté sur la surface réfléchissante (17) pour matérialiser un point rouge ou un réticule visible pour le tireur (19) par la réflexion sur la surface réfléchissante (17) quand l'oeil du tireur (19) se trouve dans le faisceau lumineux (5) réfléchi, le faisceau (5) étant projeté sur la surface réfléchissante (17) par l'intermédiaire du miroir rotatif (9) dont l'angle d'inclinaison (B) par rapport au faisceau lumineux généré (5) est réglable afin de régler l'angle de visée (D) sous lequel le point rouge est observé par le tireur (19) vis à vis d'une direction de référence (X-X') du viseur (1) et cela dans une plage des angles de visée entre un angle de visée minimal et un angle de visée maximal, **caractérisé en ce que**
la surface réfléchissante (17) est réalisée comme une surface courbe dont la convexité est tournée vers le miroir rotatif (9).

3. Viseur selon la revendication 1, **caractérisé en ce que** la forme de cet élément optique (20) est telle que les déviations qu'il provoque sur le faisceau lumineux (5) ont pour effet de réduire le trajet (OI) parcouru par celui-ci entre le miroir rotatif (9) et la surface réfléchissante (17) pour un même angle de visé, au moins dans la région des angles de visée proche de l'angle de visée (D) maximal.

4. Viseur selon la revendication 1, **caractérisé en ce que** l'élément optique (20) est situé dans la trajectoire du faisceau lumineux (5) entre le miroir rotatif (9) et la surface réfléchissante (17).

5. Viseur selon la revendication 1, **caractérisé en ce que** l'élément optique (20) est de section rectangulaire dans le plan du faisceau (5).

6. Viseur selon la revendication 1, **caractérisé en ce que** l'élément optique (20) est de section triangulaire dans le plan du faisceau (5).

7. Viseur selon les revendications 1, **caractérisé en ce que** l'élément optique (20) comprend un prisme isocèle (24) droit dont l'hypoténuse (25) joue le rôle de surface réfléchissante (17).

8. Viseur selon l'une quelconque des revendications précédentes, **caractérisé en ce que** la surface réfléchissante (17) est une surface semi-transparente.

9. Viseur selon la revendication 1 , **caractérisé en ce que** l'élément optique (20) comprend un cube séparateur (26), c'est-à-dire un ensemble de deux prismes (24) assemblés avec leur hypoténuse (25) l'un contre l'autre, dont la surface de contact est recouverte par une colle ou un coating adéquat qui rend l'ensemble (26) semi-transparent , l'hypoténuse (25) formant la surface réfléchissante (17).

10. Viseur selon l'une quelconque des revendications précédentes, **caractérisé en ce que** l'angle de visée maximal est de l'ordre de grandeur de 40° ou plus.

## Patentansprüche

1. Beweglicher roter Punktsucher zum Anvisieren einer Zielscheibe
(14) gegenüber dem Sucher, besagter Sucher beinhaltet
∘ eine befestigte Lichtquelle (4) ;
∘ einen Drehspiegel (9) ;
∘ eine reflektierende Oberfläche (17),
Die Lichtquelle (4) erzeugt einen gebündelten Lichtstrahl (5), der auf die reflektierende Oberfläche (17) projiziert wird, um einen roten Punkt oder ein Fadenkreuz zu erzeugen durch Reflexion auf der reflektierenden Oberfläche (17), wenn das Auge des Schützen (19) sich im reflektierten Lichtstrahl (5)befindet wird der Lichtstrahl (5) auf die reflektierende Oberfläche (17) projiziert mittels dem Drehspiegel (9), dessen Neigungswinkel (B) im Bezug auf den erzeugten Lichtstrahl (5) regulierbar ist, um den Visierwinkel (D) zu regulieren, in welchem der rote Punkt vom Schützen (19) gesehen wird gegenüber einer Referenzrichtung (X-X') des Suchers (1) und dieser in einem Bereich der Visierwinkel zwischen einem minimalen Visierwinkel und einem maximalen Visierwinkel, **dadurch gekennzeichnet, dass** der Sucher (1) aus mindestens einem optischen Element (20) besteht, das aus mindestens einem transparenten Element besteht (21, 22, 24, 26), welches sich in der Trajektorie des Lichtstrahls (5) zwischen dem Drehspiegel (9) und dem Auge des Schützen (19) befindet und das durch Brechung die gebündelten Lichtstrahlen (5) ablenkt und deren Einfall auf die reflektierende Oberfläche (17) ändert im Bezug auf eine Situation mit demselben Visierwinkel (D), jedoch ohne dieses optische Element (20), so dass dieser Lichtstrahl (5) bei dessen Weg durch den Drehspiegel (9) und dem Auge des Schützen (19) abgelenkt wird, die Form dieses optischen Elements (20) ist so gestaltet, dass die Abweichungen, die im Lichtstrahl (5) verursacht werden, den Effekt haben im Bezug auf eine Situation ohne dieses optische Element (20), die zurückgelegte Wegstrecke (OI) vom Einfallpunkt des Lichtstrahls (5) auf die reflektierende Oberfläche (17) durch Rotation des Drehspiegels (9) zu reduzieren zwischen zwei Positionen der Visierwinkel in mindestens einem Bereich der oben genannten Visierwinkel.

2. Beweglicher roter Punktsucher zum Anvisieren einer Zielscheibe
(14) gegenüber dem Sucher, besagter Sucher beinhaltet
∘ eine fest angebrachte Lichtquelle (4) ;
∘ einen Drehspiegel (9) ;
∘ eine reflektierende Oberfläche (17),
die Lichtquelle (4) erzeugt einen gebündelten Lichtstrahl (5), der auf die reflektierende Oberfläche (17) projiziert wird, um einen vom Schützen (19) sichtbaren roten Punkt oder ein Fadenkreuz zu kreieren durch die Reflexion auf der reflektierenden Oberfläche (17), wenn das Auge des Schützen (19) sich im reflektierten Lichtstrahl (5) befindet, wird der Lichtstrahl (5) auf die reflektierende Oberfläche (17) projiziert mittels dem Drehspiegel (9), dessen Neigungswinkel (B) im Bezug auf den erzeugten Lichtstrahl (5) regulierbar ist, um den Visierwinkel (D) zu regulieren, in welchem der rote Punkt vom Schützen (19) gesehen wird gegenüber einer Referenzrichtung (X-X') des Suchers (1) und dies in einem Bereich der Visierwinkel zwischen einem minimalen Visierwinkel und einem maximalen Visierwinkel, **dadurch gekennzeichnet, dass** die reflektierende Oberfläche (17) wie eine gekrümmte Oberfläche umgesetzt wird, deren Konvexität in Richtung des Drehspiegels (9) zeigt.

3. Sucher gemäß dem Patentanspruch 1, **dadurch gekennzeichnet, dass** die Form des optischen Elements (20) so gestaltet ist, dass die Abweichungen, welche dieses im Lichtstrahl (5) verursacht, den Effekt haben, die zurückgelegte Wegstrecke (OI) durch die zwischen dem Drehspiegel (9) und der reflektierenden Oberfläche (17) mit dem gleichen Visierwinkel mindestens im Bereich der Visierwinkel in der Nähe des maximalen Visierwinkels (D) zu reduzieren.

4. Sucher gemäß des Patentanspruchs 1, **dadurch gekennzeichnet, dass** das optische Element (20) sich in der Trajektorie des Lichtstrahls (5) zwischen dem Drehspiegel (9) und der reflektierenden Oberfläche (17) befindet.

5. Sucher gemäß dem Patentanspruch 1, **dadurch gekennzeichnet, dass** das optische Element (20) der rechteckige Abschnitt im Bereich des Lichtstrahls (5) ist.

6. Sucher gemäß dem Patentanspruch 1, **dadurch gekennzeichnet, dass** das optische Element (20) der dreieckige Abschnitt im Bereich des Lichtstrahls (5) ist.

7. Sucher gemäß dem Patentanspruch 1, **dadurch gekennzeichnet, dass** das optische Element (20) aus einem rechten gleichschenkligen Prisma (24), dessen Hypotenuse (25) die Rolle der reflektierenden Oberfläche (17) erfüllt.

8. Sucher gemäß irgendeiner der vorangegangenen Patentansprüche, **dadurch gekennzeichnet, dass** der die reflektierende Oberfläche (17) eine halbdurchsichtige Oberfläche ist.

9. Sucher gemäß dem Patentanspruch 1, **dadurch gekennzeichnet, dass** das optische Element (20) einen Strahlteilerwürfel (26) beinhaltet, das heißt, ein Set mit zwei zusammengelegten Prismen (24), mit deren Hypotenuse (25) gegeneinander, deren Kontaktfläche überzogen ist mit einem passenden Klebstoff oder einer Beschichtung (Coating), welche das Set (26) halbdurchsichtig machen, die Hypotenuse (25) bildet eine reflektierende Oberfläche (17).

10. Sucher gemäß irgendeinem der vorangegangen Patentansprüche, **dadurch gekennzeichnet, dass** der maximale Visierwinkel sich in der Größenordnung von 40° oder größer befindet.

## Claims

1. Sighting device with a moving red dot to aim at a target in front of the sighting device which comprises
- a fixed light source (4);
- a rotating mirror (9);
- a reflecting surface (17),
whereby the light source (4) produces a collimated light beam (5) which is projected onto the reflecting surface (17) so as to obtain a red dot or a reticle which is visible to the shooter (19) thanks to the reflection on the reflecting surface (17), whereby the beam (5) is projected onto the reflecting surface (17) via the rotating mirror (9) whose inclination angle (B) in relation to the produced light beam (5) can be adjusted in order to adjust the firing angle (D) at which the red dot is observed by the shooter (19) in relation to a direction of reference (X-X') of the sighting device (1) within a range of firing angles between a minimal firing angle and a maximal firing angle, **characterised in that** the sighting device (1) comprises at least one optical device (20) situated in the path of the light beam (5) between the rotating mirror (9) and the eye of the shooter (19), such that the light beam (5) deviates in its trajectory between the mobile mirror (9) and the eye of the shooter (19), whereby the shape of the device (20) is such that any deviations provoked by the latter on the light beam (5) result in a reduced trajectory (OI), compared to a situation without this optical device (20), to be travelled by the point of incidence of the light beam on the reflecting surface (17) by rotating the mirror (9) between two firing angles, at least for a part of the above-mentioned range of firing angles.

2. Sighting device with a moving red dot to aim at a target in front of the sighting device which comprises
- a fixed light source (4);
- a rotating mirror (9);
- a reflecting surface (17),
whereby the light source (4) produces a collimated light beam (5) which is projected onto the reflecting surface (17) so as to obtain a red dot or a reticle which is visible to the shooter (19) thanks to the reflection on the reflecting surface (17), when the eye of the shooter is in the reflected light beam (5), whereby the beam (5) is projected onto the reflecting surface (17) via the rotating mirror (9) whose inclination angle (B) in relation to the produced light beam (5) can be adjusted in order to adjust the firing angle (D) at which the red dot is observed by the shooter (19) in relation to a direction of reference (X-X') of the sighting device (1), in a range of firing angles between a minimal firing angle and a maximal firing angle **characterised in that** the optical device (20) comprises a curved surface (17) whose convexity is turned towards the rotating mirror (9).

3. Sighting device according to claim 1, **characterised in that** the shape of this device (20) is such that any deviations provoked by the latter on the light beam (5) result in a reduced trajectory (OI) to be travelled by the latter between the rotating mirror (9) and the reflecting surface (17) for an identical firing angle, at least in the area of the firing angles that are close to the maximal firing angle (D).

4. Sighting device according to claim 1, **characterised in that** the optical device (20) is situated in the path of the light beam (5) between the rotating mirror (9) and the reflecting surface (17).

5. Sighting device according to claim 1, **characterised in that** the optical device (20,21) has a rectangular section in the plane of the beam (5).

6. Sighting device according to claim 1, **characterised in that** the optical device (20,22) has a triangular section in the plane of the beam (5).

7. Sighting device according to claim 1, **characterised in that** the optical device (20) comprises a isosceles right angle prism (24) whose hypotenuse (25) acts as a reflecting surface (17) .

8. Sighting device according to claim 1, **characterised in that** the reflecting surface (17) is a semi-transparent surface.

9. Sighting device according to claim 1, **characterised in that** the optical device (20) comprises a beamsplitter cube (26), i.e. an assembly of two prisms (24) glued together at their hypotenuses (25), whereby their contact surfaces are coated with an appropriate glue or coating which makes the construction (26) semi-transparent, the hypotenuses (25) forming the reflecting surface (17).

10. Sighting device according to any of the preceding claims, **characterised in that** the maximal firing angle is in the order of magnitude of 40° or more.
